# EUROPÄISCHE PATENTSCHRIFT

(11) **EP 1 149 030 B1**
(45) Veröffentlichungstag und Bekanntmachung des Hinweises auf die Patenterteilung: **31.03.2004**
(21) Anmeldenummer: 00900758.4
(22) Anmeldetag: 21.01.2000
(51) Int. Cl.: B65D 81/05, B31D 3/04

(54) **TRANSPORTSICHERUNG UND VERFAHREN ZUM HERSTELLEN DERSELBEN**
TRANSPORTATION PROTECTION DEVICE AND METHOD FOR PRODUCING THE SAME
DISPOSITIF POUR PROTEGER DES OBJETS PENDANT LEUR TRANSPORT, ET PROCEDE DE PRODUCTION DUDIT DISPOSITIF

(30) Priorität: 26.01.1999 AT 10399
(43) Veröffentlichungstag der Anmeldung: 31.10.2001
(73) Patentinhaber: mechatronic Systemtechnik GmbH, 9500 Villach (AT)
(72) Erfinder: OSWALD, Wolfgang, A-9241 Wernberg (AT)
(74) Vertreter: Dungler, Karin
(86) Internationale Anmeldenummer: PCT/IB2000/000058
(87) Internationale Veröffentlichungsnummer: WO 2000/044644

(56) Entgegenhaltungen:
- FR-A- 2 050 969
- FR-A- 2 753 691
- US-A- 3 366 231

## Beschreibung

Die Erfindung betrifft eine Transportsicherung mit den Merkmalen des einleitenden Teils von Anspruch 1 und ein Verfahren zum Herstellen derselben.

Wenn Gegenstände, insbesondere Gegenstände aus zerbrechlichem Werkstoff, oder Gegenstände, die während des Transportes vor Stößen oder Schlägen gesichert werden müssen, verpackt werden, ergeben sich in der Regel erhebliche Probleme, den Raum zwischen dem verpackten Gegenstand und seiner Verpackung auszufüllen.

Üblicherweise wird der Zwischenraum zwischen einem verpackten Gegenstand und seiner Verpackung, die gewöhnlich eine geometrisch definierte Einheitsform (Prisma, Zylinder od.dgl.) besitzt, ausgefüllt, um ein Verlagern des Gegenstandes in seiner Verpackung zu verhindern und um den Gegenstand herum eine gleichmäßige Schutzzone zu bilden.

Dabei wird häufig loses Füllmaterial zwischen dem zu verpackenden Gegenstand und die Verpackung (Versandbehälter, Karton oder Kiste) eingefüllt. Als Füllmaterial werden häufig Flocken oder Formkörper aus Schaumstoff (z.B. geschäumtes Polystyrol), Stärke oder Mais, Papierpolster, geschnittene Kartonagen, Luftpolsterfolien usw. verwendet. Diese Füllmaterialien sind sowohl bei ihrer Lagerung, als auch bei ihrer Entsorgung problematisch, da sie bestimmungsgemäß voluminös sind.

Auch haben lose in Verpackungsbehälter eingefüllte Füllmaterialien den Mangel, daß sie nicht in der Lage sind, den verpackten Gegenstand dauerhaft in seiner Position in Versandbehälter zu halten. Insbesondere runde oder schwere Gegenstände wandern durch die beim Transport auftretenden Erschütterungen unter der Wirkung der auf den verpackten Gegenstand einwirkenden Schwerkraft im Behälter nach unten und liegen schließlich am Verpackungsboden auf. Dies bedeutet, daß an einer Seite der oben erwähnte Schutzbereich um den verpackten Gegenstand herum verlorengegangen ist. Auch ist es bei lose eingefülltem Füllmaterial problematisch zu gewährleisten, daß diese Schutzzone tatsächlich wie vorgesehen, überall gleichmäßig ausgebildet ist. Es werden daher häufig Luftpolsterverpackungen verwendet, die mit unterschiedlich geformten, luftgefüllten Kunststoffkissen den Raum zwischen zu verpackendem Gegenstand und Verpackung ausfüllen.

Solche (aufblasbare) Luftpolsterverpackungen haben den Vorteil, daß nach dem Auslassen der Luft von diesen Verpackungen praktisch kein Volumen mehr eingenommen wird, so daß eine unproblematische Entsorgung möglich ist, insbesondere wenn die Verpackungen aus Polyethylenfolie bestehen.

Eine Luftpolsterverpackung mit den Merkmalen des einleitenden Teils von Anspruch 1 ist aus der FR 2 050 969 A bekannt. Bei der Verpakkung gemäß der FR 2 050 969 A werden die Lagen der Folie punktförmig verbunden. Durch dieses bereichsweise Verbinden der Lagen der Folie wird zwar eine definierte Form der Vertiefung erhalten. Diese Form ist aber nicht der Umrißform des zu verpackenden Gegenstandes angepaßt.

Die FR 2 753 961 A betrifft eine aufgeblasene Verpackung für Eier, bei der in der Verpackung Löcher vorgesehen sind, in welchen die Enden der verpackten Eier aufgenommen sind. Bei diesen Löchern handelt es sich um innerhalb kreisförmiger Schweißnähte angeordnete Löcher.

Allerdings haben die bekannten Luftpolsterverpackungen den Nachteil, daß eine exakte und dauerhafte Positionierung des zu verpackenden Gegenstandes, eine Optimierung der Schutzpolsterwirkung, eine günstige Raumausnützung und eine einfache Handhabung noch unbefriedigend sind.

Der Erfindung liegt die Aufgabe zugrunde, eine Transportsicherung der eingangs genannten Gattung zur Verfügung zu stellen, welche einfach handzuhaben und herzustellen ist und dennoch einen sicheren Schutz des verpackten Gegenstandes in seiner Verpackung mit einer ringsrum gleichmäßigen und auch bei Vibrationen oder Erschütterungen beibehaltenen Schutzzone um den verpackten Gegenstand herum gewährleisten.

Gelöst wird diese Aufgabe mit einer Verpackung mit den Merkmalen des Anspruches 1.

Bevorzugte und vorteilhafte Ausgestaltungen der erfindungsgemäßen Verpackung sind Gegenstand der Unteransprüche.

Die Erfindung betrifft auch ein Verfahren zum Herstellen von Transportsicherungen gemäß der Erfindung, welches Verfahren die Merkmale des Anspruches 9 aufweist.

Bevorzugte und vorteilhafte Ausgestaltungen dieses Verfahrens sind Gegenstand der auf den Verfahrenshauptanspruch rückbezogenen Unteransprüche.

Mit der Erfindung wird eine Transportsicherung vorgeschlagen, die einerseits ein definiertes Einlegen des zu verpackenden Gegenstandes in einen Luftpolster erlaubt, weil die Form der Vertiefung der Umrißform des zu verpackenden Gegenstandes angepaßt ist und dadurch den Gegenstand über einen Großteil seiner Fläche mit einem definierten und dauerhaften Schutzmantel (= Schutzzone) umgibt. Die erfindungsgemäße Transportsicherung erfordert nur geringen Materialaufwand und kann beispielsweise aus Werkstoffen, die wiederverwendet werden, oder wurden (Recycling-Werkstoffe), z.B. aus Recycling-Kunststoffolien, hergestellt sein.

Von Vorteil bei der erfindungsgemäßen Transportsicherung ist es, daß der zu verpackende Gegenstand in der Transportsicherung in einem aufblasbaren Hohlkörper aufgenommen ist, der beim Aufblasen einen definierten Aufnahmeraum in Form einer der Umrißform des zu verpakkenden Gegenstandes angepaßten Vertiefung aufweist, deren Wände sich beim Aufblasen oder nach dem Einlegen des zu verpackenden Gegenstandes an dessen Außenflächen anlegen und/oder anformen, so daß der zu verpackende Gegenstand festgehalten und ringsum von einer federnden Schutzzone umgeben ist. Durch Wahl der Dichtheit und Widerstandsfähigkeit des Folienwerkstoffes, aus welchem der Hohlkörper gebildet ist, können die erfindungsgemäßen Transportsicherungen an den jeweiligen Verwendungszweck genau angepaßt werden.

Die erfindungsgemäß vorgeschlagene Transportsicherung in Form eines Hohlkörpers kann beispielsweise durch entsprechendes Falten und dichtes Verbinden an den Rändern aus einer ebenen Folie erzeugt werden, wobei die aufeinanderliegenden Folien bereichsweise dicht miteinander verbunden werden, um den beim Aufblasen sich ausbildenden Aufnahmeraum zu definieren. Durch Wahl der Kontur des Bereiches der Folien, in dem diese miteinander verbunden sind, kann der nach dem Aufblasen gebildete Hohlkörper eine Ausnehmung oder Vertiefung als Aufnahmeraum aufweisen, die der Umrißform des zu verpackenden Gegenstandes weitestgehend angepaßt ist.

Als Werkstoff für die erfindungsgemäße Transportsicherung bieten sich Kunststoffolien, insbesondere Folien aus thermoplastischem Kunststoff an, da diese auch den Vorteil haben, daß die Schnitt- und Konturkanten dort, wo erforderlich, durch Schweißen miteinander verbunden werden. So dies nicht möglich ist, können die Schnitt- und Konturkanten durch Kleben miteinander verbunden werden, wobei sowohl beim Schweißen als auch beim Kleben eine überlappendes Aufeinanderlegen der Schnittkanten bevorzugt ist.

Es ist auch möglich, die erfindungsgemäße Transportsicherung in Form eines Hohlkörpers aus einem Abschnitt eines Endlosschlauches oder Halbschlauches herzustellen, dessen Schnittkanten dicht miteinander verbunden werden. Besonders geeignete Folienkunststoffe für die Verwendung bei der erfindungsgemäßen Transportsicherung sind Polyethylenfolien, die auch umweltverträglich sind.

Die Abmessungen des Hohlkörpers sowohl was dessen Außenabmessungen, als auch die Abmessungen des in ihm vorgesehenen Aufnahmeraumes betrifft, wird durch die Größe der Verpackung und die Größe des zu verpackenden Gegenstandes bestimmt. Dabei besteht die Möglichkeit, in einem Hohlkörper mehrere Vertiefungen durch bereichsweises Verbinden der beiden Folienlagen des Hohlkörpers auszubilden, wenn mehrere Gegenstände in einer Verpackung gemeinsam verpackt werden sollen.

Die Form, Ausrichtung, Gestaltung der Kontur der miteinander verschweißten Bereiche (mit dem Ziel, im aufgeblasenen Hohlkörper eine als Aufnahmeraum dienende Vertiefung auszubilden) kann durch Verbinden der Folien mit einer vorgefertigten Matrize (Konturenstempel) herbeigeführt werden. Auch hier kann entweder verschweißt oder wenn ein Verschweißen der Kunststoffolie nicht möglich ist, geklebt werden.

Wenn in der erfindungsgemäßen Transportsicherung beim Herstellen derselben die Folien miteinander bereichsweise verbunden werden, besteht auch die Möglichkeit, in ein- und demselben Arbeitsgang auch die Ränder der beiden Folien, die dicht miteinander zu verbinden sind, miteinander durch Verkleben oder Verschweißen zu verbinden. Dies kann durch Verwendung entsprechend geformter Matrizenstempel erreicht werden.

Eine andere Art und Weise des Herstellens besteht darin, daß entlang der miteinander zu verschweißenden Linien (Konturlinien) mit Hilfe eines entsprechend gewählten Laserschweißkopfes, Ultraschallkopfes, Klebepipette, Klebedüse oder Thermozelle entlanggefahren wird.

Verfahren, nach welchen die Konturlinien in oben beschriebener Weise (Kleben oder Schweißen) mittels Rollen erzeugt werden, sind ebenfalls anwendbar.

Die in den erfindungsgemäßen als Transportsicherung dienenden Hohlkörpern vorgesehenen Aufnahmeräume, beispielsweise nach einem Muster erzeugte Vertiefungen, können als einfache Hohlräume, aber auch als Taschen ausgeführt sein, die mindestens eine Öffnung zum Einbringen des zu verpackenden Gutes aufweisen. Wenn solche Hohlraumtaschen gebildet werden, ist es möglich, durch zusätzliches Aufbringen einer Folie auf bestehende Taschen und bereichsweises Verbinden der Folie mit dem aufgeblasenen Hohlkörper eine Art Tasche oder Beutel zu bilden.

Wenn der aufgeblasene Hohlkörper mit dem in seinen Aufnahmeraum eingesetzten, zu verpackenden Gegenstand eine definierte Außenform besitzt, kann er einfach gestapelt und/oder einfach raumsparend in eine Verpackung oder eine andere geometrisch definierte Schutzhülle, (z.B. Überkarton) eingeschlichtet werden.

In einer Ausführungsform kann durch eine Unterbrechung in der Konturlinie (Abbildung des einzupackenden Gegenstandes) in dem Hohlkörper die Möglichkeit geschaffen werden, die als Aufnahmeraum dienende Vertiefung an ihrer Unterseite ebenfalls mit einer Luftpolsterschutzzone auszubilden.

Im Rahmen der Erfindung besteht auch die Möglichkeit, einen mit Aufnahmeräumen für zu verpackende Gegenstände (oder wenigstens einem Aufnahmeraum für einen zu verpackenden Gegenstand) ausgebildeten Hohlkörper mit einem Hohlkörper ohne solche Aufnahmeräume zu kombinieren, der nach dem Einlegen des oder der Gegenstände in den Aufnahmeraum als zusätzliche Schutzzone über den Hohlkörper gefaltet werden kann, wobei solche zusätzlichen Hohlkörper ohne Aufnahmeräume auf einer oder beiden Seiten angeordnet sein können.

Wenn in der erfindungsgemäßen Transportsicherung eine Vielzahl von Aufnahmeräumen vorgesehen ist, können empfindliche Kleinteile verpackt werden, wobei diese Teile als Schüttgutt in die gebildeten Aufnahmeräume lose oder in Schutzhüllen aufgenommen, eingelegt werden können.

Das Abdichten des Hohlkörpers und das Aufblasen des Hohlkörpers erfolgt üblicherweise bei kleinen Einheiten durch (Instant)-Verkleben oder bei Thermoplasten auch durch Schweißen. Für größere Hohlkörper, insbesondere solche, die nicht als Einwegverpackung gedacht sind, können Ventile vorgesehen sein.

In jedem Fall kann das Aufblasen der Hohlkörper vor dem Einlegen des zu verpackenden Gegenstandes oder der zu verpackenden Gegenstände oder auch nachher erfolgen.

Es versteht sich, daß die erfindungsgemäße Transportsicherung in üblicher weise eingefärbt oder mit Aufdrucken versehen werden kann.

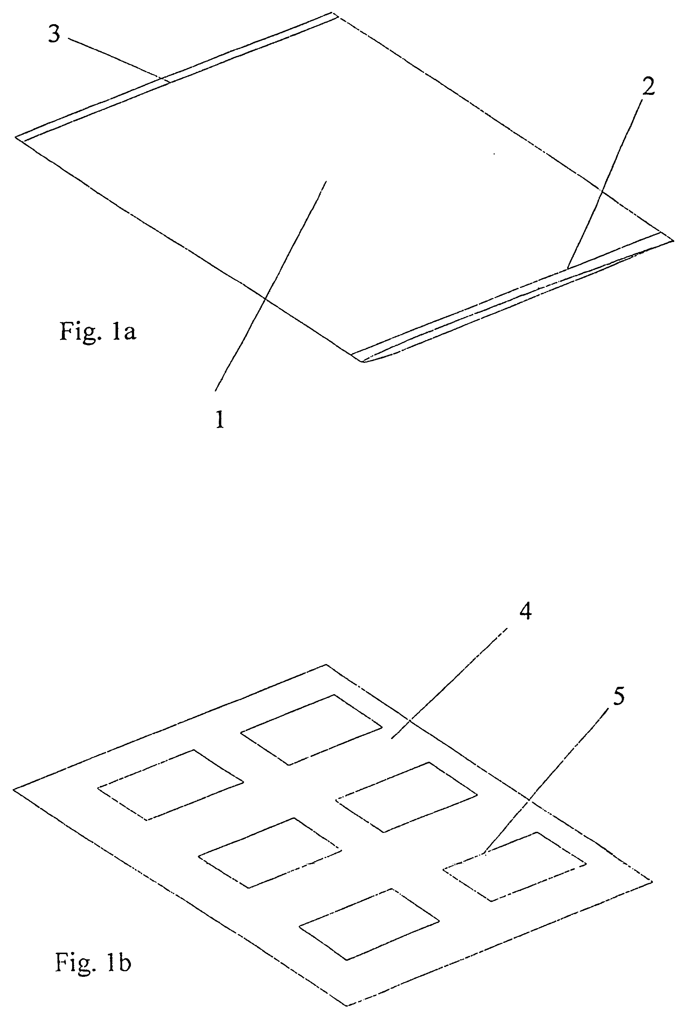

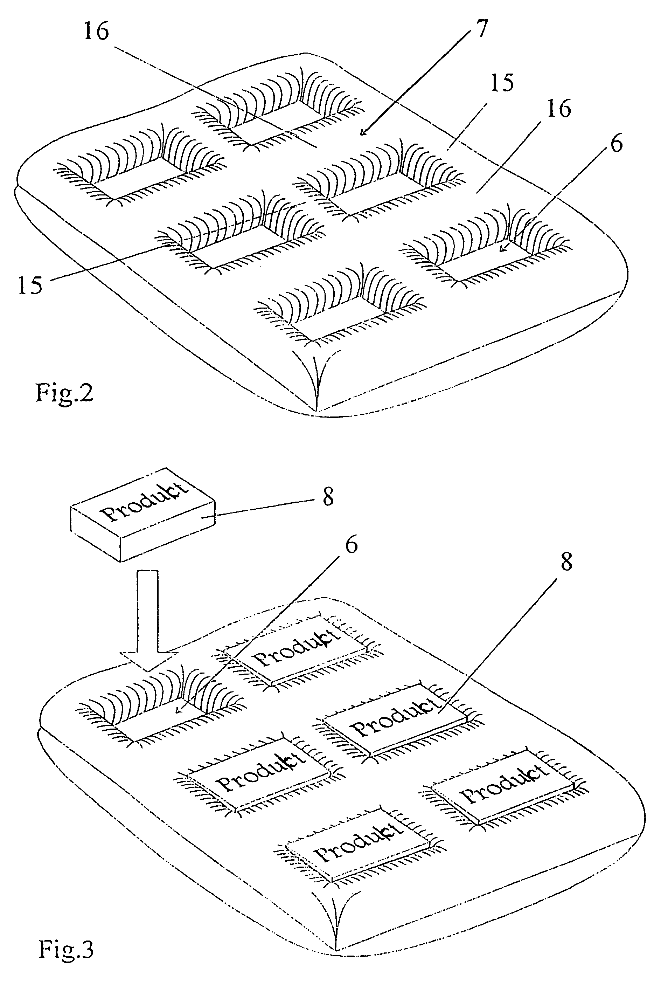

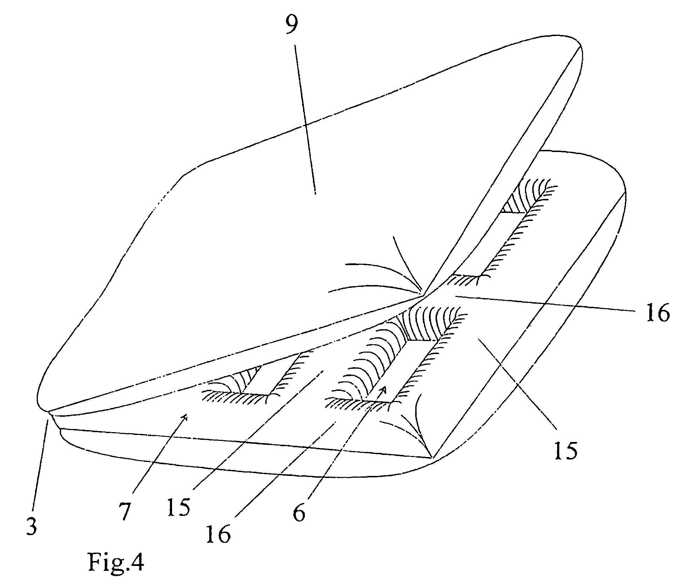

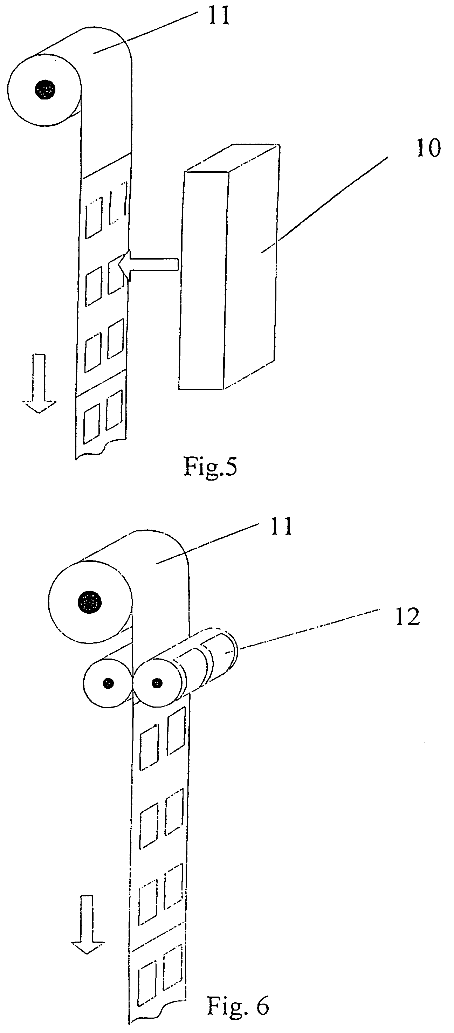

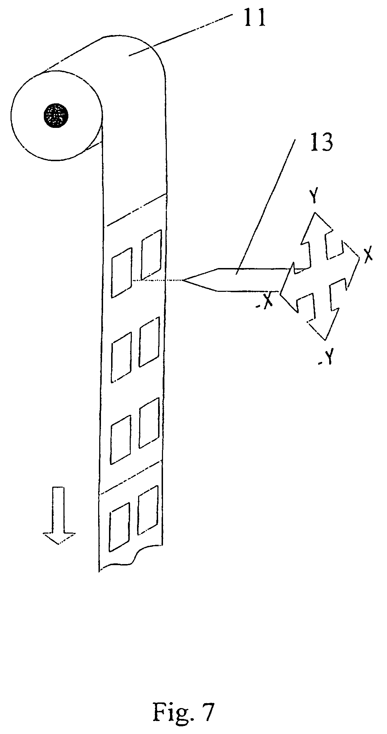

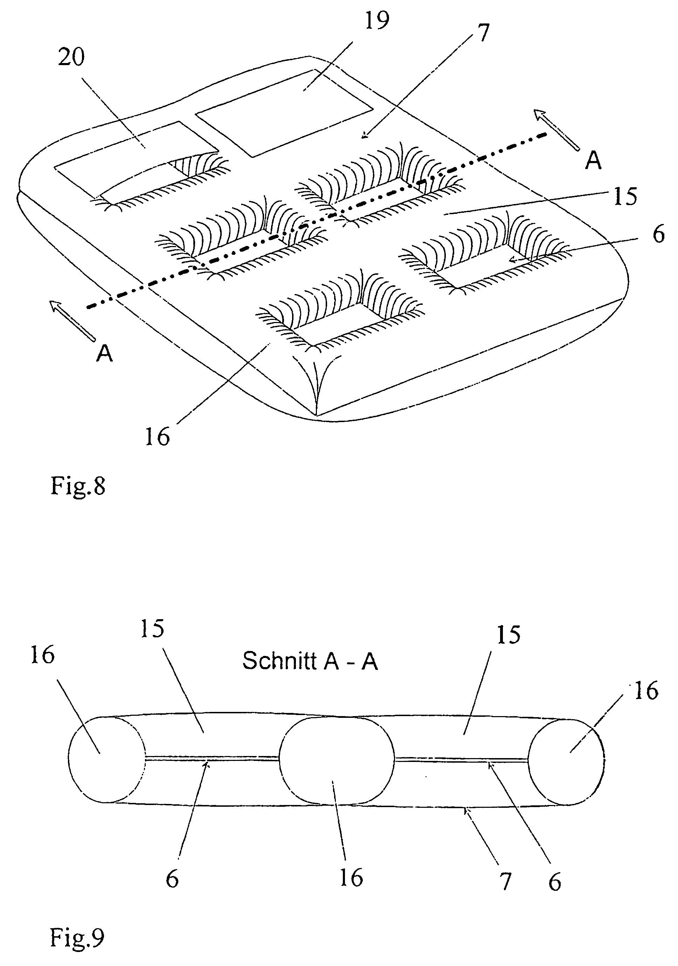

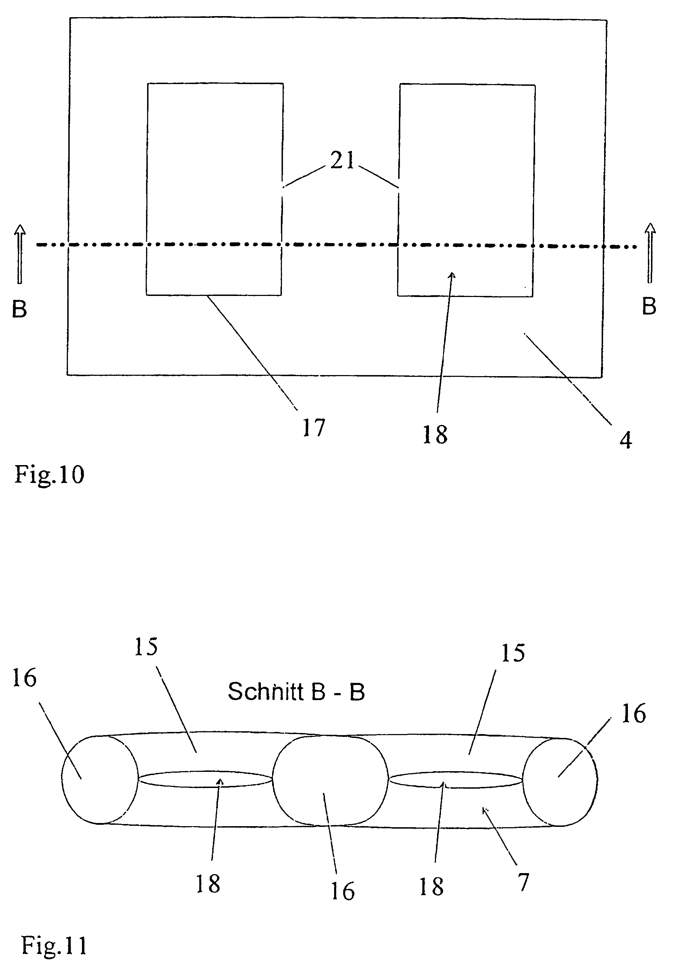

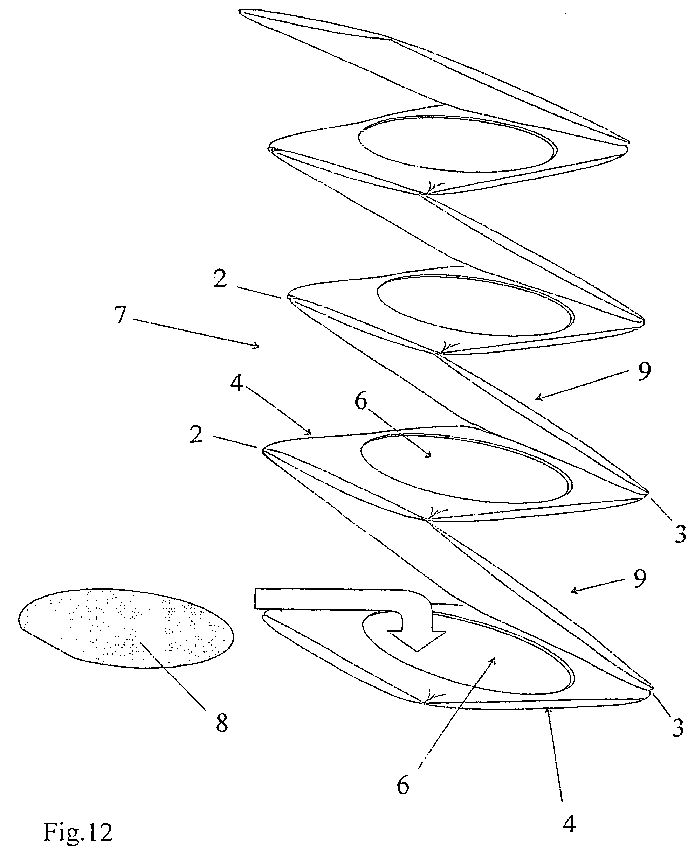

weitere Einzelheiten, Merkmale und Vorteile der Erfindung ergeben sich aus der nachstehenden Beschreibung bevorzugter Ausführungsbeispiele anhand der Zeichnungen. Es zeigt Fig. 1a und Fig. 1b zwei Schritte beim Herstellen einer erfindungsgemäßen Transportsicherung mit sechs Aufnahmeräumen für zu verpackende Gegenstände, Fig. 2 die nach Fig. 1a und 1b hergestellte Transportsicherung in aufgeblasenem Zustand, Fig. 3 die Transportsicherung aus Fig. 2, nachdem in sie zu verpackende Gegenstände "Produkt" eingelegt worden sind, Fig. 4 eine abgeänderte Ausführungsform einer erfindungsgemäßen Transportsicherung, Fig. 5 ein Verfahren zum Herstellen einer erfindungsgemäßen Transportsicherung in einer ersten Ausführungsform, Fig. 6 schematisch eine abgewandelte Ausführungsform des Verfahrens der Erfindung und Fig. 7 eine dritte Ausführungsform eines Verfahrens der Erfindung, Fig. 8 eine andere Ausführungsform einer Transportsicherung, Fig. 9 einen Schnitt längs der Linie A-A in Fig. 8, Fig. 10 eine weitere Ausführungsform einer Transportsicherung, Fig. 11 einen Schnitt längs der Linie B-B in Fig. 10 und Fig. 12 eine Ausführungsform der Transportsicherung für scheibenförmige Gegenstände.

Ausgehend von einem an beiden Enden durch Quernähte 2 und 3 geschlossenen Schlauch 1, der ein Abschnitt eines Schlauches aus Kunststoffs sein kann, oder der dadurch hergestellt worden ist, daß eine Flachfolie einmal auf sich selbst umgefaltet worden ist und an dem der Faltung gegenüberliegenden Längsrand verschweißt worden ist, um ein schlauchförmiges Gebilde zu bilden, werden in dem so gebildeten ringsum geschlossenen Hohlkörper 4, bestehend aus zwei Folienlagen längs der in Fig. 1b eingezeichneten, im gezeigten Beispiel rechteckigen Konturen 5 die beiden Folienlagen des Hohlkörpers 4 miteinander, insbesondere linienförmig, verbunden (verklebt oder verschweißt). Dieses Verbinden kann beispielsweise durch einen Stempel (Matrize) durch eine Matrizenwalze oder durch ein nach X- und Y-Richtungen bewegtes Schweißsystem gebildet werden.

Wenn der nach Fig. 1b erhaltene Hohlkörper 4 aufgeblasen wird, nimmt er die in Fig. 2 in Schrägansicht gezeigte Form an, wobei Vertiefungen 6 vorliegen, die wulstförmigen Abschnitten 15 und 16 der Transportsicherung 7 umgeben sind. Die Form der Vertiefungen 6 wird durch die Form der Konturlinien 5, entlang welchen die beiden Folienlagen des Hohlkörpers 4 miteinander verbunden sind, bestimmt.

Fig. 3 zeigt, wie in die so von den Vertiefungen 6 gebildeten Aufnahmeräume zu verpackende Gegenstände 8 ("produkt") eingelegt werden können.

Es ist ersichtlich, daß diese Gegenstände 8 ringsum durch die Wülste 15 und 16 gehalten sind, wobei die Abmessungen der Vertiefungen 6 und der diese bewirkenden Konturlinien 5 so gewählt sein können, daß der zu verpackende Gegenstand 8 klemmend in der Vertiefung 6 festgehalten wird. Nach unten hin ist der bzw. sind die verpackten Gegenstände 8 ebenfalls geschützt, da die die Vertiefung(en) 6 nach unten begrenzenden Bereiche der Folienlagen der Transportsicherung 7 von der Unterseite einen Abstand aufweisen, da auch an der Unterseite Wülste vorliegen (siehe Fig. 9).

Fig. 4 zeigt, daß auf der Oberseite der Transportsicherung 7, also an der Seite, auf welcher die Vertiefungen 6, in welche Gegenstände 8 eingelegt werden können, offen sind, eine Abdeckung 9, die als Polster ausgebildet sein kann, angeordnet sein kann.

Es besteht die Möglichkeit, diese Abdeckung 9 dadurch auszubilden, daß der die Transportsicherung 7 bildende Folienschlauch länger ausgebildet wird, als in Fig. 1a bis 2 gezeigt. Die Abdeckung 9 ist von dem die Vertiefungen 6 aufweisenden Abschnitt der Transportsicherung 7 durch die als Gelenk wirkende Schweißnaht 3 getrennt.

Es gibt auch eine Ausführungsform, bei welcher der Deckel 9 ebenfalls Vertiefungen entsprechend den Vertiefungen 6, wie sie in Fig. 2 gezeigt sind, besitzt, was beispielsweise Vertiefungen 6 in der Transportsicherung 7 tief sind.

Bei der in Fig. 5 schematisch gezeigten Arbeitsweise zum Herstellen von erfindungsgemäßen Transportsicherungen wird von einer Vorratsrolle 11 ein Folienschlauch abgezogen und mit Hilfe einer Matrize 10 in vorgewählten Abständen, die Quernähte 2 und 3, sowie die Konturlinien 5 in Form von Schweißlinien eingebracht, so daß die beiden Folienlagen des Folienschlauches, der von der vorratsrolle 11 abgezogen wird, im Bereich der Quernähte 2 und 3, sowie der Konturlinien 5 miteinander verbunden sind, so daß sich nach dem Aufblasen die in Fig. 2 gezeigte Ausführungsform einer erfindungsgemäßen Transportsicherung 7 ergibt.

Es versteht sich, daß die Anzahl und die Form der Konturlinien 5, die in Fig. 5 und in den übrigen Figuren mit sechs bzw. rechteckig wiedergegeben ist, lediglich beispielhaft ist. Die Konturlinien können jede beliebige, an die Form des zu verpackenden Gegenstandes 8 (Projektion desselben auf eine ebene Fläche) angepaßte Kontur haben, und es können eine, zwei oder auch mehrere Vertiefungen 6 in einer Transportsicherung 7 in Form eines Polsters vorgesehen sein.

Bei der Variante nach Fig. 6 wird der von der Vorratsrolle 11 abgezogene Folienschlauch kontinuierlich mit Hilfe von entsprechend geformten Walzen 12 behandelt, so daß sich die Linien 2, 3 und 5 ergeben, entlang welcher Linien die beiden Lagen des Folienschlauches, der von der Vorratsspule 11 abgezogen wird, miteinander verbunden sind (verschweißt oder verklebt).

Eine Ausführungsform des erfindungsgemäßen Verfahrens, das eine weitgehend beliebige Kontur und ein einfaches Ändern derselben erlaubt, wenn andere Form von Konturlinien 5 und/oder eine andere Anzahl von Konturlinien 5 gewünscht werden, zeigt Fig. 7. Dort wird mit Hilfe eines nach X/Y verstellbaren Werkzeuges 13, beispielsweise einer Laserschweißeinheit, einer Ultraschallschweißeinheit, einer Klebstoffdüse, oder eines Heizkopfes erreicht, daß die Lagen des Folienschlauches so miteinander verbunden werden, daß sich die Quernähte 2 und 3, sowie die Nähte entlang der Konturlinien 5 ergeben.

Bei der in Fig. 8 gezeigten Ausführungsform mit sechs Vertiefungen 6 für zu verpackende Gegenstände ist gezeigt, daß einzelne Vertiefungen 6 teilweise oder zur Gänze durch eine zusätzliche Folie abgedeckt sein können. Dabei ist in Fig. 8 gezeigt, wie durch eine zusätzliche Folie 20, die bereichsweise mit wulstförmigen Abschnitten 15 und 16 verbunden ist, nicht die gesamte Öffnung der Vertiefung 6 abgedeckt ist, so daß ein zu verpackender Gegenstand in die Vertiefung 6 eingeschoben werden kann.

In Fig. 8 ist auch eine Ausführungsform gezeigt, bei der die zusätzliche Folie 19 die Vertiefung 6 an ihrer offenen Seite zur Gänze abdeckt. Diese Ausführungsform kann beispielsweise gewählt werden, wenn in die Vertiefung 6 mehrere Einzelteile oder teilchenförmiges oder stückiges Gut (Schüttgut) zu verpacken sind, und erst dann die Folie 19 längs ihres Umfanges mit Wulsten 15, 16 der Transportsicherung 7 verbunden wird, so daß ein zu verpackender Gegenstand oder anderes zu verpakkendes Gut (Schüttgut) in der Vertiefung 6 gehalten wird.

Es versteht sich, daß bei der in Fig. 8 gezeigten Ausführungsform Abdeckfolien 19 und/oder 20 an allen oder nur an einzelnen der Vertiefungen 6 vorgesehen sein können.

Der in Fig. 9 gezeigte Schnitt durch eine erfindungsgemäße Transportsicherung 7 zeigt, daß die Folien der erfindungsgemäßen Transportsicherung 7 die den Boden der Vertiefungen 6 bilden, sowohl von der Oberseite als auch an der Unterseite der Transportsicherung 7 Abstand haben.

Bei der in den Fig. 10 und 11 gezeigten Ausführungsform sind die beiden Folienlagen des die erfindungsgemäße Transportsicherung 7 bildenden Hohlkörpers 4 nicht entlang der gesamten Konturlinien 17 miteinander verbunden, sondern die Linie 17, entlang welcher die beiden Folienlagen miteinander verbunden sind, weisen wenigstens eine Unterbrechung 21 auf. Dies hat nach dem Aufblasen der Transportsicherung 7 den Effekt, daß im Bereich des Bodens 18 die der Vertiefungen 6 ebenfalls ein Polster gebildet wird, da Luft, die in den die Transportsicherung 7 bildenden Hohlkörper 4 eingeblasen wird, auch in den Bereich, in dem die beiden Folienlagen der erfindungsgemäßen Transportsicherung 7 entlang den Konturlinien 17 miteinander verbunden sind, eindringt und so den in Fig. 11 gezeigten polsterförmigen Boden 18 bildet.

Die in Fig. 12 gezeigte Ausführungsform einer Transportsicherung 7 dient insbesondere zum Verpacken von mehreren scheibenförmigen Gegenständen, z.B. von Halbleitern-Wafern, und besteht im gezeigten Ausführungsbespiel aus mehreren abwechselnd, aneinandergefügten Hohlkörpern 4 mit - im Beispiel - je einer Vertiefung 6 und Abdeckungen 9. Wenngleich es im Prinzip möglich ist, einen einzigen Hohlkörper 4 mit einer Abdeckung 9 zu verbinden, ist in dem in Fig. 12 gezeigten Ausführungsbeispiel eine Ausführungsform gewählt worden, bei der die Transportsicherung 7 abwechselnd mehrere Hohlkörper 4 und Abdeckungen 9 aufweist, die durch Quernähte 2 und 3 miteinander so verbunden sind, daß sie zickzack-förmig zusammengelegt werden kann. So besteht die Möglichkeit, mehrere scheibenförmige Gegenstände 8 (z.B. Silizium-Wafern) für den Transport geschützt zu verpacken. Die Vertiefungen 6, die einen Gegenstand 8 enthalten, sind in jedem Hohlkörper 4 der (Mehrfach-)Transportsicherung 7 der Fig. 12 durch die zugeordneten Abdeckungen 9, nach dem Einlegen der scheibenförmigen Gegenstände 8, zuverlässig abgedeckt.

Zusammenfassend kann ein Ausführungsbeispiel der Erfindung wie folgt beschrieben werden:

Eine Transportsicherung 7 ist ein polsterförmiger Hohlkörper 4 aus Folienwerkstoff, in dem ein Aufnahmeraum oder mehrere Aufnahmeräume in Form von Vertiefungen 6 vorgesehen sind. In die Aufnahmeräume 6, die ringsum von Wulsten 15, 16 des polsterförmigen Hohlkörpers 4 umgeben sind, können zu verpackenden Gegenstände 8 eingelegt werden. Die Vertiefungen 6 in der Transportsicherung 7, welche Aufnahmeräume für die zu verpackenden Gegenstände 8 bilden, werden dadurch hergestellt, daß die beiden Lagen des Hohlkörpers 4 miteinander längs einer Konturlinie 5 verbunden werden, die der Umrißform des zu verpackenden Gegenstandes 8, wenigstens angenähert ist. Der Transportsicherung 7 kann eine Abdeckung 9 zugeordnet sein, welche die offenen Seiten der Vertiefungen 6 verschließt.

## Patentansprüche

1. Transportsicherung (7) für zu verpackende Gegenstände (8), die ein Hohlkörper (4) in Form eines aufblasbaren Polsters ist, wobei in dem aufblasbaren Polster wenigstens eine einseitig durch einen Boden begrenzte Vertiefung (6) als Aufnahmeraum für einen zu verpackenden Gegenstand (8) vorgesehen ist, wobei die Form der Vertiefung (6) durch bereichsweises Verbinden der beiden einander gegenüberliegenden Lagen des aufblasbaren Hohlkörpers (4) definiert ist, und wobei die Lagen des aufblasbaren Hohlkörpers (4) den Boden der Vertiefung (6) bilden, **dadurch gekennzeichnet, daß** die Form der Vertiefung (6), die durch die Form einer Konturlinie (5, 17), entlang welcher die beiden Lagen des Hohlkörpers (4) miteinander verbunden sind, bestimmt ist, der Umrißform des zu verpackenden Gegenstandes (8) angepaßt ist.

2. Transportsicherung nach Anspruch 1, **dadurch gekennzeichnet, daß** die wenigstens eine Vertiefung (6) im aufblasbaren Hohlkörper (4) ringsherum von Polsterwulsten (15, 16) umgeben ist.

3. Transportsicherung nach Anspruch 1 oder 2, **dadurch gekennzeichnet, daß** der Boden der Vertiefung (6) bei aufgeblasenem Hohlkörper (4) mit Abstand von der der offenen Seite der Vertiefung (6) gegenüberliegenden Unterseite der Transportsicherung (7) angeordnet ist.

4. Transportsicherung nach einem der Ansprüche 1 bis 3, **dadurch gekennzeichnet, daß** an wenigstens einem Rand des aufblasbaren Hohlkörpers (4) eine, vorzugsweise aufblasbare, Abdeckung (9) zum Abdecken der offenen Seite der Vertiefung (6) vorgesehen ist.

5. Transportsicherung nach Anspruch 4, **dadurch gekennzeichnet, daß** in der Abdeckung (9) wenigstens eine mit der Vertiefung (6) im aufblasbaren Hohlkörper (4) korrespondierende Vertiefung vorgesehen ist.

6. Transportsicherung nach einem der Ansprüche 1 bis 5, **dadurch gekennzeichnet, daß** der Hohlkörper (4) und gegebenenfalls der Deckelteil (9) aus einer Kunststoffolie, insbesondere aus einer Folie aus thermoplastischem Kunststoff, vorzugsweise Polyethylen, besteht.

7. Transportsicherung nach einem der Ansprüche 1 bis 6, **dadurch gekennzeichnet, daß** in der Konturlinie (17), entlang welcher die beiden Lagen des Hohlkörpers (4) miteinander verbunden sind, wenigstens eine Unterbrechung (21) vorgesehen ist, durch die der innerhalb der Konturlinie (17) angeordnete Raum zwischen den Folienlagen des Hohlkörpers (4)) mit dem Innenraum der die Vertiefung (6) umgebenden Polsterwulste (15, 16) verbunden ist.

8. Transportsicherung nach einem der Ansprüche 1 bis 7, **dadurch gekennzeichnet, daß** der aufblasbare Hohlkörper (4) längs eines Randes (3) mit einer Abdeckung (9) verbunden ist, und daß mit dem Rand (2) der Abdeckung (9), der dem Rand (3) entlang welchem die Abdeckung (9) mit dem aufblasbaren Hohlkörper (4) verbunden ist, gegenüberliegt, wenigstens ein weiterer aufblasbarer Hohlkörper (4) mit zugeordneter Abdeckung (9) verbunden ist.

9. Verfahren zum Herstellen einer Transportsicherung nach einem oder mehreren der Ansprüche 1 bis 8, **dadurch gekennzeichnet, daß** zwei im wesentlichen flächengleiche Folien längs ihrer Ränder miteinander luftdicht verbunden werden, und daß die Folien mit Abstand von den Umfangsrändern der Folien im Bereich wenigstens einer Konturlinie miteinander verbunden werden, wobei die Form der Konturlinie der Umrißform des zu verpackenden Gegenstandes angepaßt ist.

10. Verfahren nach Anspruch 9, **dadurch gekennzeichnet, daß** die beiden Folien Teile eines Folienschlauches sind, der quer zur Längserstreckung des Schlauches durch zwei Nähte luftdicht verschlossen wird.

11. Verfahren nach Anspruch 9 oder 10, **dadurch gekennzeichnet, daß** die Folien durch Prägen mit einem Matrizenstempel entlang der Konturlinie miteinander verbunden werden.

12. Verfahren nach Anspruch 9 oder 10, **dadurch gekennzeichnet, daß** die Folien zwischen den Walzen eines Walzenpaares durchgeführt werden, von denen wenigstens eine zum Verbinden der Folien im Bereich der Konturlinien eingerichtet ist.

13. Verfahren nach Anspruch 9 oder 10, **dadurch gekennzeichnet, daß** die Folien entlang der Konturlinie miteinander durch Laserschweißen, Ultraschallschweißen, Verkleben oder thermisches Verschweißen verbunden werden.

## Claims

1. Shipping safeguard (7) for articles (8) to be packaged, which is a hollow body (4) in the form of an inflatable cushion, in the inflatable cushion there being at least one recess (6) which is bordered on one side by a bottom as the receiving space for an article (8) to be packaged, the shape of the recess (6) being defined by connecting the two opposing layers of the inflatable hollow body (4) in areas, and the layers of the inflatable hollow body (4) forming the bottom of the recess (6), **characterized in that** the shape of the recess (6) which is determined by the shape of the contour line (5, 17) along which the two layers of the hollow body (4) arc connected to one mother is matched to the outline shape of the article (8) which is to be packaged.

2. Shipping safeguard as claimed in claim 1, wherein at least one recess (6) in the inflatable hollow body (4) is surrounded by the cushion beads (15, 16).

3. Shipping safeguard as claimed in claim 1 or 2, wherein the bottom of the recess (6) with the hollow body (4) inflated is located at a distance from the bottom of the transport safeguard (7) opposite the open side of the recess (6).

4. Shipping safeguard as claimed in one of claims 1 to 3, wherein on at least one edge of the inflatable hollow body (4) there is a preferably inflatable cover (9) for covering the open side of the recess (6).

5. Shipping safeguard as claimed in claim 4, wherein in the cover (9) there is at least one recess which corresponds to the recess (6) in the inflatable hollow body (4).

6. Shipping safeguard as claimed in one of claims 1 to 5, wherein the hollow body (4) and optionally the cover part (9) consists of a plastic film, especially of a film of thermoplastic, preferably polyethylene.

7. Shipping safeguard as claimed in one of claims 1 to 6, wherein in the contour line (17) along which the two layers of the hollow body (4) are connected to one another, there is at least one interruption (21) by which the space located within the contour line between the film layers of the hollow body (4) is connected to the interior of the cushion beads (15, 16) which surround the recess (6).

8. Shipping safeguard as claimed in one of claims 1 to 7, wherein the inflatable hollow body (4) is connected along one edge (3) to the cover (9), and wherein with the edge (2) of the cover (9) which is opposite the edge (3) along which the cover (9) is connected to the inflatable hollow body (4), at least one other inflatable hollow body (4) is connected to the assigned cover (9).

9. Process for producing a transport safeguard as claimed in one or more of claims 1 to 8, wherein two films with essentially the same area are connected airtight to one another along their edges, and wherein the films are connected to one another with a distance from the peripheral edges of the films in the area of at least one contour line, the shape of the contour line being matched to the outline shape of the article which is to be packaged.

10. Process as claimed in claim 9, wherein the two films are parts of a tubular film which is closed airtight by two seams transversely to the lengthwise extension of the tube.

11. Process as claimed in claim 9 or 10, wherein the films are connected to one another by stamping with a die along the contour line.

12. Process as claimed in claim 9 or 10, wherein the films are routed through between the rollers of a roller pair, by which at least one is set up for connecting the films in the area of the contour lines.

13. Process as claimed in claim 9 or 10, wherein the films are connected to one another along the contour line by laser welding, ultrasonic welding, cementing or thermal bonding.

## Revendications

1. Dispositif de calage pendant le transport (7) pour des objets (8) à emballer, qui est un corps creux (4) sous forme de rembourrage gonflable, au moins une cavité (6) qui est délimitée d'un côté par un fond étant prévue dans le rembourrage gonflable en tant que logement pour un objet (8) à emballer, la forme de la cavité (6) étant obtenue en liant par endroits les deux plis en vis-à-vis du corps creux (4) gonflable et les plis du corps creux (4) gonflable formant le fond de la cavité (6), **caractérisé en ce que** la forme de la cavité (6), qui est déterminée par la forme d'une ligne de contour (5, 17) le long de laquelle les deux plis du corps creux (4) sont liés l'un à l'autre, est adaptée au contour de l'objet (8) à emballer.

2. Dispositif de calage pour le transport selon la revendication 1, **caractérisé en ce que** la cavité (6) au nombre d'au moins une dans le corps creux (4) gonflable est entièrement entourée de boudins de rembourrage (15, 16).

3. Dispositif de calage pour le transport selon la revendication 1 ou 2, **caractérisé en ce que** le fond de la cavité (6), à l'état gonflé du corps creux (4), est disposé à distance de la face inférieure du dispositif de calage (7) pour le transport opposée au côté ouvert de la cavité (6).

4. Dispositif de calage pour le transport selon une des revendications 1 à 3, **caractérisé en ce qu'**il est prévu sur au moins un bord du corps creux (4) gonflable, une couverture (9), de préférence gonflable, pour couvrir le côté ouvert de la cavité (6).

5. Dispositif de calage pour le transport selon la revendication 4, **caractérisé en ce qu'**il est prévu dans la couverture (9) au moins une cavité qui correspond à la cavité (6) dans le corps creux (4) gonflable.

6. Dispositif de calage pour le transport selon une des revendications 1 à 5, **caractérisé en ce que** le corps creux (4) et le cas échéant l'élément formant couverture (9) sont formés d'une feuille de matière plastique, plus particulièrement d'une feuille de matière thermoplastique, de préférence de polyéthylène.

7. Dispositif de calage pour le transport selon une des revendications 1 à 6, **caractérisé en ce qu'**il est prévu dans la ligne de contour (17), le long de laquelle les deux plis du corps creux (4) sont liés l'un à l'autre, au moins une discontinuité (21) par laquelle l'espace entre les deux plis du corps creux (4) situé à l'intérieur de la ligne de contour (17) est mis en communication avec l'espace intérieur des boudins de rembourrage (15, 16) entourant la cavité (6).

8. Dispositif de calage pour le transport selon une des revendications 1 à 7, **caractérisé en ce que** le corps creux (4) gonflable est relié le long d'un bord (3) à une couverture (9), et **en ce qu'**au bord (2) de la couverture situé en vis-à-vis du bord (3), le long duquel la couverture (9) est liée au corps creux (4) gonflable, est relié au moins un corps creux (4) gonflable supplémentaire avec sa couverture (9) associée.

9. Procédé de fabrication d'un dispositif de calage pour le transport selon une ou plusieurs des revendications 1 à 8, **caractérisé en ce que** deux feuilles essentiellement de surface identique sont liées l'une à l'autre, de manière étanche à l'air, le long de leurs bords et **en ce que** les feuilles sont liées l'une à l'autre à distance des bords périphériques de la feuille dans la région d'au moins une ligne de contour, la forme de la ligne de contour étant adaptée à au contour de l'objet à emballer.

10. Procédé selon la revendication 9, **caractérisé en ce que** les deux feuilles sont des parties d'une gaine, qui est fermée de manière étanche à l'air, transversalement à la longueur de la gaine, par deux cordons de soudure.

11. Procédé selon la revendication 9 ou 10, **caractérisé en ce que** les feuilles sont reliées entre elles le long de la ligne de contour, par estampage à l'aide d'un poinçon de matrice.

12. Procédé selon la revendication 9 ou 10, **caractérisé en ce qu'**on fait passer les feuilles entre les cylindres d'une paire de cylindres, parmi lesquels l'un au moins est agencé pour lier les feuilles dans la région des lignes de contour.

13. Procédé selon la revendication 9 ou 10, **caractérisé en ce que** les feuilles sont liées l'une à l'autre le long de la ligne de contour par soudage laser, par soudage par ultrasons, par collage ou par soudage thermique.
